# EUROPEAN PATENT APPLICATION

(11) **EP 3 388 497 A1**
(43) Date of publication of application: **17.10.2018**
(21) Application number: 16873248.5
(22) Date of filing: 15.11.2016
(51) Int. Cl.: C10B 53/08, C10B 57/10, F26B 3/02, F26B 25/00, B01D 53/00, F26B 23/00, B01D 46/00

(54) **METHOD AND DEVICE FOR REFORMING COAL**

(30) Priority: 10.12.2015 KR 20150176280
(71) Applicant: Posco, Pohang-si, Gyeongsangbuk-do 37859 (KR)
(72) Inventor: SEO, Seung Kuk, Pohang-si Gyeongsangbuk-do 37859 (KR); LEE, Woon Jae, Pohang-si Gyeongsangbuk-do 37669 (KR); KIM, Jong Pil, Suncheon-si Jeollanam-do 57973 (KR)
(74) Representative: Zech, Stefan Markus
(86) International application number: PCT/KR2016/013159
(87) International publication number: WO 2017/099382

(57) **Abstract**

The present disclosure relates to a coal reforming method and a coal reforming device including: preparing a coal; charging the coal into a reaction furnace; removing a volatile matter contained in the coal while supplying hot blast to the reaction furnace and flowing the coal; collecting a reformed coal from which the volatile matter has been removed and the volatile matter contained in a low rank coal may be easily removed.

## Description

### TECHNICAL FIELD

The present disclosure relates to a coal reforming method and a coal reforming device, and more specifically, to a coal reforming method and a coal reforming device for removing a volatile matter contained in a coal.

### RELATED ART

Generally, a coal is divided into ranks such as peat, brown coal, lignite, sub-bituminous coal, bituminous coal and anthracite. Then, the bituminous coal is divided into ranks of low volatile matter bituminous coal, volatile matter bituminous coal and high volatile matter bituminous coal. And then, the anthracite is divided into ranks of semi-anthracite, anthracite, meta anthracite, and graphite anthracite coal. Among these, an LRC (Low Rank Coal) includes the brown coal, the lignite, and the sub-bituminous coal. In this connection, the bituminous coal and the anthracite coal are classified as an HRC (High Rank Coal). The terms "high rank" and "low rank", which are used to refer to the coal herein, do not mean a quality of the coal, but rather a difference in a degree of carbonation with respect to the coal.

Generally, raising a rank of high-moisture, high-ash lignite which is the LRC to a rank of the bituminous coal which is the HRC through processes such as dehydration, drying and stabilization is defined as a reforming or an upgrading method. In this specification, the ash refers to a component which remains after the coal is burned. Silica mineral such as silicon dioxide as an inorganic matter occupies as most of the ash, and the volatile matter refers to tar and other components.

Currently, fossil fuels such as the coal and petroleum are mostly used as energy sources. To replace the fossil fuel, researches on renewable energy such as solar energy and bio energy are being actively carried out, but an economic efficiency for an industrial application is still limited. Due to this delayed development of such renewable energy, a demand for the coal is increasing again recently. However, a supply of the HRC for a power generation or a steel making is limited so that a trading price is above $ 100 per ton.

In order to replace such HRC, the LRC is imported from countries such as Australia, China, Indonesia, and the like to be applied to industry. However, since the LRC contains a large amount of the ash and the moisture, there is a limit to direct use of the LRC.

That is, the LRC is not easy to logistics because of its high weight and volume. Further, the LRC such as the lignite contains a lot of pores and a large amount of the volatile matter. Thus, the use of the LRC has been limited due to a temperature increase result in an adsorption heat accumulation because of absorption/desorption of the moisture and a high possibility of spontaneous ignition based on a presence of oxygen functional group which occupies a considerable amount in the volatile matter. In addition, when the LRC is directly used for the power generation or the steel making process, there are problems that a process efficiency is lowered, and an environmental pollution is caused.

Thus, when it is possible to obtain the excellent HRC in a safety without any danger of fire and an environmentally friendly and an economical way, the HRC is expected to be useful in related fields.

### Disclosure of present disclosure

### Technical purposes

The present disclosure provides a coal reforming method and a coal reforming device for producing a coal with high thermal efficiency by removing a volatile matter.

The present disclosure provides a coal reforming method and a coal reforming device for reducing environmental pollution.

### Technical solutions

A coal reforming method, the method may be including: preparing a coal; charging the coal into a reaction furnace; removing a volatile matter contained in the coal while supplying hot blast to the reaction furnace and flowing the coal; collecting a reformed coal from which the volatile matter has been removed.

Charging the coal and collecting the reformed coal may be continuously performed.

The coal may be charged into the reaction furnace at a rate of 50 to 80 g per minute in the charging of the coal.

Removing the volatile matter may be performed at 550 to 800 °C.

Exhaust gas generated when the volatile matter is removed may be collected while collecting the reformed coal.

Collecting a fine coal from the exhaust gas may be included in the coal reforming method.

Cooling the exhaust gas to separate a byproduct contained in the exhaust gas may be included in the coal reforming method.

The exhaust gas from which the byproduct is removed may be used as a heat source for producing the hot blast.

The hot blast may include an inert gas.

The inert gas may be nitrogen gas and may be supplied to the reaction furnace at a flow rate of 0.35 to 0.6 m/sec.

A coal reforming device, the device may include: a reaction furnace having a treating space defined therein in which coal is treated; a coal supply unit for supplying the coal to the reaction furnace; a hot blast supply unit for supplying hot blast to the reaction furnace; and a collecting unit collecting a reformed coal from the reaction furnace, wherein the reformed coal is free of a volatile matter.

The reaction furnace may include: a reaction tube for treating the coal; and heating means for heating the reaction tube.

A hot-blast dispersing unit for dispersing the hot blast into the furnace may be provided below the reaction furnace.

An exhaust pipe through which exhaust gas is exhausted may be connected to the reaction furnace, wherein a filter for collecting a fine coal from the exhaust gas may be coupled to the exhaust pipe.

Cooling means for cooling the exhaust gas traveling through the exhaust pipe may be coupled to the exhaust pipe, wherein a byproduct storage for storing a byproduct contained in the exhaust pipe may be disposed at an end of the exhaust pipe.

An exhaust gas storage connected to the byproduct storage may be included in the carbonaceous reforming device.

A circulating pipe connecting the exhaust gas storage and the hot blast supply unit with each other may be included in the carbonaceous reforming device.

The hot blast supply unit may include: an inert gas storage for storing an inert gas; and an igniter coupled to the circulating pipe.

### Advantageous effects

According to the embodiments of the present disclosure, the volatile matter contained in the low rank coal may be easily removed. The reformed coal with the volatile matter removed may generate high calories, thus, the reformed coal may be used for a power generation or used as a steel making fuel, which may help reduce costs.

Further, in the process of removing the volatile matter contained in the coal may collect the byproduct such as tar, crude light oil, and the like, and these byproducts are may be used as a fuel and an energy source. In addition, the exhaust gas may be reused as a heat source for producing the hot blast supplied to the reaction furnace, thereby reducing an environmental pollution caused by the exhaust gas.

### BRIEF DESCRIPTION OF THE DRAWINGS

Figure 1 shows a coal reforming device according to an embodiment of the present disclosure.
Figure 2 is a sequence diagram showing a coal reforming method according to an embodiment of the present disclosure.
Figure 3 is a graph showing a mass change of a coal based on a heating temperature of the coal.
Figure 4 is a graph showing accumulated amounts of a particle size distribution of a coal based on a heating temperature of the coal.

### DETAILED DESCRIPTION

Hereinafter, an embodiment of the present disclosure will now be described in detail with reference to the accompanying drawings. The present disclosure may, however, be embodied in many different forms and should not be construed as limited to the embodiments set forth herein; rather, these embodiments are provided by way of illustration only and so that this disclosure will be thorough, complete and will fully convey the full scope of the invention to those skilled in the art. In the accompanying drawings, the dimensions of the structure show an enlarged scale than actual for clarity of the disclosure. The same or similar reference numerals are used throughout the drawings and the description in order to refer to the same or similar constituent elements.

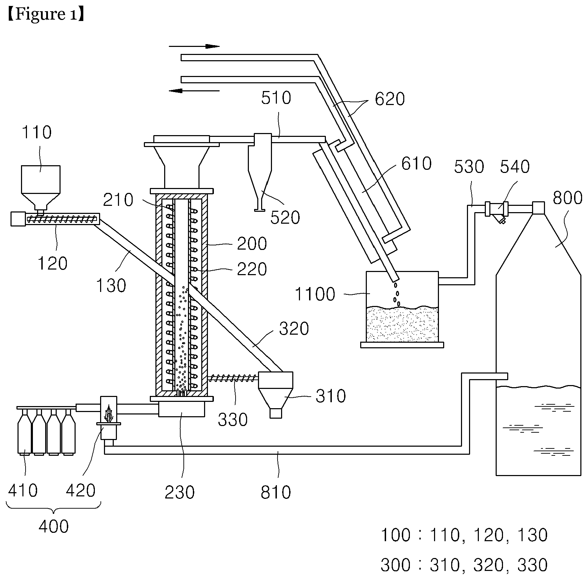

Figure 1 shows a coal reforming device according to an embodiment of the present disclosure.

Referring to Figure 1, the coal reforming device according to the embodiment of the present disclosure may include a reaction furnace 200 having a treating space therein in which coal is treated, a coal supply unit 100 supplying the coal to the reaction furnace, a hot blast supply unit 400 supplying hot blast to the reaction furnace 200, and a collecting unit 300 collecting reformed coal from which volatile matter is removed in the reaction furnace 200.

The reaction furnace 200 may be formed in a hollow shape in which a space capable of reforming the coal is formed therein. For example, the reaction furnace 200 may be formed in a hollow cylindrical shape. Since the coal is heated in the reaction furnace 200 to remove the volatile matter contained in the coal, the reaction furnace 200 is preferably formed so as to maintain internal heat. The reaction furnace 200 may include a reaction tube 210 for forming a reaction space therein and heating means 220 for heating the reaction tube 210. The reaction tube may be arranged in the reaction furnace 200 in a longitudinal direction of the reaction furnace 200, top and bottom ends of the reaction tube may be open to allow the hot blast to inflow into the bottom end, and exhaust gas which is generated after the coal reforming may be exhausted to the top end. A hot-blast dispersing unit 230 may be provided below the reaction furnace 200 to uniformly supply the hot blast into the reaction furnace 200.

The coal supply unit 100 for supplying the coal may be connected to the reaction furnace 200, and the collecting unit 300 for discharging the reformed coal that is, the reformed coal, may be connected to the reaction furnace 200.

The coal supply unit 100 may include a coal storage 110 for storing the coal, a feeder 120 for discharging the coal in a predetermined amount from the coal storage 110, and a first pipe 130 used as a path through which the coal that has been fed is injected into the reaction furnace 200. In this connection, the first pipe 130 may be connected to the inside of the reaction tube 210 in the reaction furnace 200.

The collecting unit 300 may include a second pipe 320 used as a path for discharging the reformed coal discharged from the reaction furnace 200 and a reformed coal storage 310 for receiving the reformed coal discharged through the second pipe 320. Further, the collecting unit 300 may include a drain 330 for forcibly discharging the reformed coal which cannot be discharged from the reaction furnace 200. The drain 330 may be provided at a lower side of the reaction furnace 200 to remove the reformed coal which cannot be discharged to the second pipe 320 because of its relatively large particle size. In addition, the drain 330 is connected to the reformed coal storage 310 to transfer the forcibly discharged reformed coal to the reformed coal storage 310.

In this connection, the first pipe 130 and the second pipe 320 may be provided at the same level or at different levels at the reaction furnace 200. For example, the first pipe 130 may be disposed at a higher level than the second pipe 320 to increase a traveling distance of the coal in the reaction furnace 200, thus by increasing a contact time with the hot blast in the reaction furnace 200 the volatile matter may be removed easily.

The reaction furnace 200 may be connected to the hot blast supply unit 400 for supplying the hot blast into the reaction furnace 200, for example, the reaction tube 210. The hot blast supply unit 400 may be connected to the bottom end of the reaction furnace 200. In addition, the hot blast supply unit 400 may include a gas storage 410 for storing an inert gas for controlling the inside atmosphere of the reaction furnace 200 to an inert atmosphere and an igniter 420 for producing the inert gas supplied from the gas storage 410 and the hot blast supplied into the reaction furnace 200. In this connection, the gas storage 410 may store nitrogen gas. In addition, the igniter 420 is for producing the hot blast by igniting the exhaust gas generated in the reaction furnace 200, the igniter 420 may be installed at a traveling path of the exhaust gas to be described later.

Further, an exhaust port (not shown) for exhausting the exhaust gas generated in the reaction furnace 200 may be formed with the reaction furnace 200, and an exhaust pipe 510 for exhausting the exhaust gas may be connected to the exhaust port.

The exhaust pipe 510 may be provided with a filter 520 for collecting a fine coal in the exhaust gas. That is, when removing the volatile matter from the coal in the reaction furnace 200, the coal is flowed using the hot blast, so that the exhaust gas may contain the fine coal with a very small particle size. Accordingly, the filter 520 may be provided with the exhaust pipe 510 to collect the fine coal contained in the exhaust gas.

In addition, the exhaust pipe 510 may include cooling means 610, 620 for cooling the exhaust gas. The cooling means 610, 620 may be provided in front of the filter 520 with respect to the traveling direction of the exhaust gas. The cooling means 610, 620 are for collecting a byproduct contained in the exhaust gas, that is, such as tar, crude light oil by cooling the exhaust gas. The cooling means 610, 620 may include a cooling jacket 610 surrounding at least a portion of the exhaust pipe 510 and a cooling water supply pipe 620 supplying cooling water to the cooling jacket 610.

At an end of the exhaust pipe 510, a byproduct storage 1100 for storing the byproduct may be disposed. The byproduct storage 1100 may be formed to be hermetically connected to the end of the exhaust pipe 510 in order to be disconnected from the outside. Thus, the byproducts such as the tar, the crude light oil, etc. may be collected in the byproduct storage 1100 to prevent the remaining exhaust gas from leaking to the outside.

The byproduct storage 1100 may also be connected to an exhaust gas storage 800. The byproduct storage 1100 and the exhaust gas storage 800 may be connected to each other through a connection pipe 530 so as to communicate with each other. The exhaust gas inflowing into the byproduct storage 1100 may be collected in the exhaust gas storage 800 through the connection pipe 530. In this connection, the connection pipe 530 may be provided with a sensor 540 for measuring a flow of the exhaust gas. Further, a flow rate or a flow of the hot blast may be predicted by measuring the flow of the exhaust gas using the sensor 540. The exhaust gas storage 800 is filled with water and the flow of the exhaust gas in the exhaust gas storage 800 may be measured by a level of the water varying based on an amount of the exhaust gas inflowed into the exhaust gas storage 800.

A circulating pipe 810 for circulating the exhaust gas to the hot blast supply unit 400 may be connected to the exhaust gas storage 800. The circulating pipe 810 may be defined in a traveling path of the inert gas, and the igniter 420 of the hot blast supply unit 400 may be installed at an end thereof. In addition, the hot blast may be generated by igniting the exhaust gas traveling through the circulating pipe 810, and the inert gas may be mixed with the hot blast and supplied to the reaction furnace 200.

Hereinafter, a coal reforming method according to an embodiment of the present disclosure will be described.

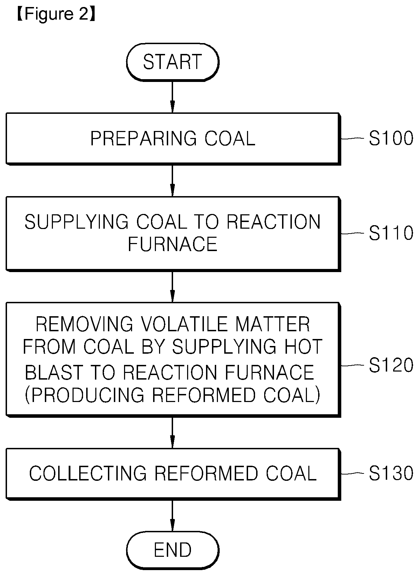

Figure 2 is a sequence diagram showing a coal reforming method according to the embodiment of the present disclosure.

Referring to Figure 2, the coal reforming method according to the embodiment of the present disclosure may include: preparing a coal (S100); charging the coal into a reaction furnace (S110); removing a volatile matter contained in the coal by supplying hot blast to the reaction furnace and flowing the coal (S120); collecting reformed coal from which the volatile matter has been removed (S130).

In preparing the coal, the low rank coal such as the lignite or the bituminous coal containing 40 wt% or more of the volatile matter is prepared and stored in the coal storage 110. In this connection, the coal may have a particle which size is 3 mm or less. When the particle size of the coal is larger than 3 mm, the coal may be pre-crushed.

When the coal is prepared, the internal temperature of the reaction furnace 200 is increased using the heating means 220 of the reaction furnace 200. The internal temperature of the reaction furnace 200 may be raised to about 550 to 800 °C so that the volatile matter in the coal may be easily removed. In an initial stage of this process, the internal temperature of the reaction furnace 200 is increased using the heating means 220, but when the exhaust gas is generated as the process proceeds, the hot blast produced by combusting the exhaust gas may be supplied to the reaction furnace 200. Of course, when the hot blast is supplied to the reaction furnace 200, the internal temperature of the reaction furnace 200 may be efficiently controlled by operating the heating means 220. At the same time, the inert gas stored in the gas storage 410 may be supplied to the reaction furnace 200. The inert gas such as the nitrogen gas may be supplied at a flow of about 60 to 80 ℓ/min at a flow rate of 0.35 to 0.6 m/sec. The volatile matter removed from the coal during the reforming of the coal may be ignited when the volatile matter comes into contact with the oxygen, thus the inert gas may be supplied to reduce the oxygen concentration in the reaction furnace 200.

Thereafter, the coal stored in the coal storage 110 is discharged by the predetermined amount using the feeder 120 and injected into the reaction furnace 200 through the first pipe 130. In this connection, the coal may be injected into the reaction furnace 200 at a rate of about 3 to 5 kg per hour, that is, about 50 to 80 g per minute. Since the coal is flowed and reformed by the hot blast in the reaction furnace 200, when a large amount of the coal is injected at one time, a flow space becomes narrow and the volatile matter cannot be smoothly removed. Therefore, it is preferable to inject the coal appropriately within the range suggested.

When the coal is injected into the reaction furnace 200, the coal flows in the reaction furnace 200, i.e., the reaction tube 210, by the hot blast supplied to the reaction furnace 200. The coal has a fine particle of 3 mm or less, so that the coal may be repeatedly floated and lowered by the hot blast. The coal flows in the reaction furnace 200 as described above and comes into contact with the hot blast with high temperature, and the volatile matter contained in the coal may be removed by the hot blast. The coal may be rapidly heated by the hot blast while flowing in the reaction furnace 200, or may be differentiated by colliding with each other. Therefore, the coal flows more actively in the reaction furnace 200 and the volatile matter may be removed. The time for removal of the volatile matter in the coal may be performed for about 5 to 45 minutes depending on the temperature in the reaction furnace 200.

When the volatile matter in the coal is removed, the coal from which the volatile matter has been removed, that is, the reformed coal, is easily floated and charged into the reformed coal storage 310 through the second pipe 320 connected to an outlet of the reaction furnace 200.

The reformed coal, which has been reformed in the reaction furnace 200 but cannot be discharged to the second pipe 320 because of the large particle size, may be discharged through the drain 330 and charged into the reformed coal storage 310.

In this way, the injection and collection of the coal may be carried out continuously.

The exhaust gas generated from the reaction furnace 200 may be discharged to the exhaust pipe 510 through the exhaust port formed at an upper portion of the reaction furnace 200. The exhaust gas passes through the filter 520 as it travels through exhaust pipe 510. At this time, the fine coal (reformed coal) contained in the exhaust gas may be collected by the filter 520. Thereafter, the exhaust gas is cooled by the cooling means 610, 620 installed at the exhaust pipe 510 and then, the byproduct such as the tar and the crude light oil contained in the exhaust gas is condensed by a temperature drop and is supplied to the byproduct storage 1100 and may be stored therein. In this connection, the exhaust gas may be cooled to about 80 to 100 °C by the cooling means 610, 620.

The exhaust gas from which the byproduct is removed travels to the exhaust gas storage 800 through the connection pipe 530 from the byproduct storage 1100 and then to the hot blast supply unit 400 through the circulating pipe 810 connected to the exhaust gas storage 800.

The exhaust gas is ignited by the igniter 420 installed at an end of the circulating pipe 810 and combusted. Combustion gas generated while the exhaust gas is combusted is supplied to the hot blast in the reaction furnace 200 together with the inert gas.

Hereinafter, an experimental example for examining physical properties of the reformed coal produced by the coal reforming method according to the present disclosure will be described.

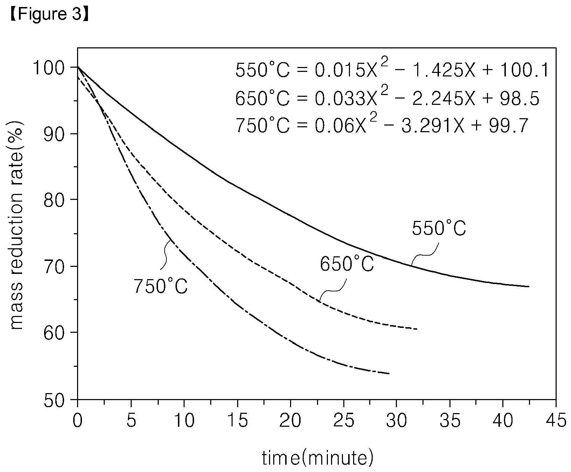

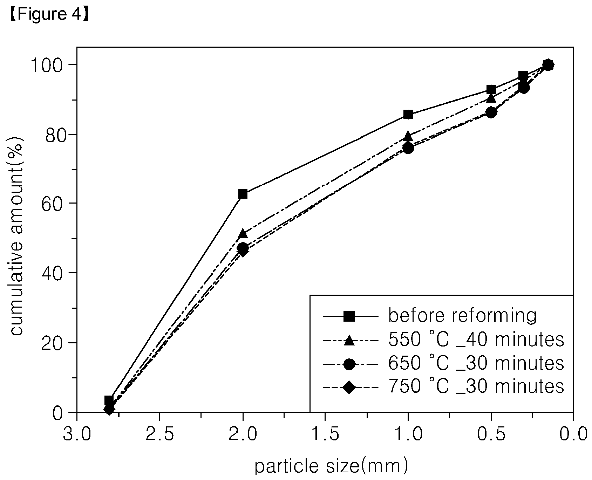

Figure 3 is a graph showing a mass change of the coal based on the heating temperature of the coal. Figure 4 is a graph showing accumulated amounts of a particle size distribution of the coal based on the heating temperature of the coal.

Unlike the embodiment, the experiment was carried out without flowing the coal.

An alumina ball was charged into a reactor so that the inert gas was uniformly dispersed. In addition, in order to prevent the coal flowing at the upper portion of a reaction furnace a 200 mesh stainless screen was installed. Then, the fine coal was charged to an upper portion of the screen. In this connection, the coal which is the coal having the volatile matter content of 46 wt% was used.

Thereafter, the reactor was charged into a heating furnace and heat was applied. Then, the nitrogen gas was supplied in the reactor at a flow of 5 ℓ/min to form the inert atmosphere inside the reaction furnace. The experiment was repeatedly performed while raising a temperature of the heating furnace to 550, 650, and 750 °C.

After the experiment, the reactor was withdrawn from the heating furnace, and the mass change was measured by separating the heat-treated coal, that is, the reformed coal.

Figure 3 shows the result of measuring the mass change of the reformed coal.

When the heating furnace temperature was 550 °C, 20 minutes after the heating, the mass of the reformed coal was measured to be changed about 23% in comparison with the initial mass. In other words, about 50% of the volatile matter (46%) contained in the initial coal was removed. In addition, about 73% of the volatile matter contained in the initial coal was removed after 43 minutes of the heating, and there was almost no mass change thereafter.

When the temperature of the heating furnace was 650 °C, it was measured that the mass of the reformed coal was changed by 23% compared to the initial mass after 11 minutes of the heating. That is, about 50% of the volatile matter (46%) contained in the initial coal was removed. In addition, about 22 minutes after the heating, about 75% of the volatile matter contained in the initial coal was removed, and there was almost no mass change thereafter.

When the temperature of the heating furnace was 750 °C, it was measured that the mass of the reformed coal was changed by 23% from the initial mass after 7 minutes of the heating. That is, about 50% of the volatile matter (46%) contained in the initial coal was removed. Then, about 75% of the volatile matter contained in the initial coal was removed after 15 minutes of the heating, there was almost no mass change thereafter.

The result of this experiment shows that the volatile matter in the coal is closely related to the temperature in the reaction furnace, and that the higher the temperature in the reaction furnace, the faster the volatile matter is removed. Further, it is possible to remove the volatile matter of a certain amount, for example, about 75%, depending on the temperature of the reaction furnace during the coal reforming, but it is difficult to completely remove the volatile matter.

Then, the changes in the particle size of the reformed coal obtained in the above test were also examined. In this examination, the particle size distributions of the reformed coal were compared cumulatively. The particle sizes of the coal were classified as 2.8 to 2.1 mm, 2.0 to 1.1 mm, 1.0 to 0.6 mm, 0.5 to 0.4 mm, 0.3 to 0.16 mm, and 0.15 mm, respectively. The collected reformed coal was put into a sieve, and the collected reformed coal was divided by its particle size by vibration for 1 minute. A collection amount and a collection rate of each particle size were analyzed cumulatively. Then, 100 g of the coal before the reforming was classified by the same method of classifying the reformed coal, and the collection amount and the collection rate of each particle size were cumulatively analyzed and used as reference data.

As shown in Figure 4, the higher the reaction furnace temperature, the lower yield of reformed coal. This is because the volatile matter in the coal has been removed. In an actual operation, the yield may be further reduced because the fine coal contained in the exhaust gas is not completely collected by the filter. Then, the higher the temperature of the heating furnace, the smaller a fraction of 2.0 mm or more, which is relatively large particle size. It is believed that this is due to the differentiation of the coal result from the rapid temperature change. Further, the fraction of the reformed coal with the particle size of 2.0 mm or more is expected to be further reduced because the coal is collided and crushed while flowing in the actual operation.

It should be noted that although the technical idea of the present disclosure has been described concretely in accordance with the above embodiments, the above embodiments are intended to be illustrative and not restrictive. Also, those skilled in the art of the present disclosure will understand that various embodiments are possible within the scope of the technical idea of the present disclosure.

### Industrial availability

The coal reforming method and the coal reforming device according to the present disclosure may collect the byproduct such as the tar, the crude light oil, and the like in the process of removing the volatile matter contained in the coal, and these byproducts are may be used as a fuel and an energy source. In addition, the exhaust gas may be reused as a heat source for producing the hot blast supplied to the reaction furnace, thereby reducing an environmental pollution caused by the exhaust gas.

## Claims

1. A coal reforming method, the method comprising:
preparing a coal;
charging the coal into a reaction furnace;
removing a volatile matter contained in the coal while supplying hot blast to the reaction furnace and flowing the coal;
collecting a reformed coal from which the volatile matter has been removed.

2. The method of claim 1, wherein charging the coal and collecting the reformed coal are continuously performed.

3. The method of claim 2, wherein the coal is charged into the reaction furnace at a rate of 50 to 80 g per minute in the charging of the coal.

4. The method of claim 1, wherein removing the volatile matter is performed at 550 to 800 °C.

5. The method of claim 2, wherein exhaust gas generated when the volatile matter is removed is collected while collecting the reformed coal.

6. The method of claim 5, including collecting a fine coal from the exhaust gas.

7. The method of claim 6, including cooling the exhaust gas to separate a byproduct contained in the exhaust gas.

8. The method of claim 7, wherein the exhaust gas from which the byproduct is removed is used as a heat source for producing the hot blast.

9. The method of claim 8, wherein the hot blast includes an inert gas.

10. The method of claim 9, wherein the inert gas is nitrogen gas and is supplied to the reaction furnace at a flow rate of 0.35 to 0.6 m/sec.

11. A coal reforming device, the device comprising:
a reaction furnace having a treating space defined therein in which a coal is treated;
a coal supply unit for supplying the coal to the reaction furnace;
a hot blast supply unit for supplying hot blast to the reaction furnace; and
a collecting unit for collecting a reformed coal from the reaction furnace, wherein the reformed coal is free of a volatile matter.

12. The device of claim 11, wherein the reaction furnace includes:
a reaction tube for treating the coal; and
heating means for heating the reaction tube.

13. The device of claim 12, wherein a hot-blast dispersing unit for dispersing the hot blast into the furnace is provided below the reaction furnace.

14. The method of claim 11, wherein an exhaust pipe through which exhaust gas is exhausted is connected to the reaction furnace, wherein a filter for collecting a fine coal from the exhaust gas is coupled to the exhaust pipe.

15. The device of claim 14, wherein cooling means for cooling the exhaust gas traveling through the exhaust pipe is coupled to the exhaust pipe,
wherein a byproduct storage for storing a byproduct contained in the exhaust pipe is disposed at an end of the exhaust pipe.

16. The device of claim 15, including an exhaust gas storage connected to the byproduct storage.

17. The device of claim 16, including a circulating pipe connecting the exhaust gas storage and the hot blast supply unit with each other.

18. The device of claim 17, wherein the hot blast supply unit includes:
an inert gas storage for storing an inert gas; and
an igniter coupled to the circulating pipe.
